Europäisches Patentamt

European Patent Office

Office européen des brevets

(11) Publication number: **0 045 497**
**B1**

# EUROPEAN PATENT SPECIFICATION

(45) Date of publication of patent specification: **09.10.85**

(51) Int. Cl.⁴: **B 60 G 11/52, F 16 F 3/10**

(21) Application number: **81106029.2**

(22) Date of filing: **31.07.81**

(54) **Vehicle suspension device.**

(30) Priority: **05.08.80 JP 107275/80**
**01.12.80 JP 169366/80**
**25.04.81 JP 60389/81**

(43) Date of publication of application:
**10.02.82 Bulletin 82/06**

(45) Publication of the grant of the patent:
**09.10.85 Bulletin 85/41**

(84) Designated Contracting States:
**DE FR GB SE**

(56) References cited:
**EP-A-0 023 646**
**EP-A-0 036 994**
**FR-A-1 240 087**
**GB-A- 497 008**
**GB-A- 576 424**
**GB-A-1 063 754**
**GB-A-1 505 232**
**US-A-2 605 099**
**US-A-3 346 221**

(73) Proprietor: **NHK SPRING CO., Ltd.**
**1 Shinisogo-cho, Isogo-ku**
**Yokohama-shi (JP)**

(72) Inventor: **Nishiyama, Masakazu**
**1-6-2-428, Saga**
**Koto-ku Tokyo (JP)**
Inventor: **Shinbori, Takeyoshi**
**5-3-8, Take**
**Yokosuka-shi Kanagawa-ken (JP)**
Inventor: **Yamamoto, Hideo**
**6-15-13, Yokodai Isogo-ku**
**Yokohama-shi (JP)**
Inventor: **Kebukawa, Akira**
**3-5-3, Nishihara**
**Shibuya-ku Tokyo (JP)**

(74) Representative: **Prüfer, Lutz H., Dipl.-Phys.**
**Harthauser Strasse 25d**
**D-8000 München 90 (DE)**

(56) References cited:
**AUTOMOBILTECHNISCHE ZEITSCHRIFT,
vol.80, no.2, February 1978, Stuttgart (DE), G.
ALICKE et al.: "Kraftfahrzeugfedern aus
zelligem polyurethan-elastomer", pages 63-66**

Courier Press, Leamington Spa, England.

## Description

The present invention relates to a vehicle suspension device according to the preamble of claim 1.

A suspension device of this kind is known from the GB—A—497 008. In this known suspension device the coil spring is embedded in a cylinder of elastic rubber. The rubber has the ability to resist the applied stress and therefore increases the elastic modulus of the suspension device to cause a curved deflection graph in compression and tension.

From GB—A—1 505 232 it is known to provide a shock-absorber with a certain number of foam blocks, in which a steel connecting element is partly embedded. The foam blocks have an open-cell structure, which allows water to enter into the foam to cause corrosion of the steel connecting member.

It is the object of the invention to provide a vehicle suspension device wherein the spring characteristics may not be adversely effected and corrosion of the coil spring may be prevented.

According to the invention, this object is achieved by the feature of the characterizing part of claim 1.

Further inventive solutions are characterized in the claims 2 and 3.

Preferably the synthetic resin foam is treated to be surging-proof by uniformly mixing in the foam a vibration damping agent such as iron powder and/or sand powder.

Preferably said water-proofing means includes a hydrophobic agent mixed in the foam. The hydrophobic agent is a substance having a hydrophobic property. The soft synthetic resin open-cell foam may include a soft polyurethane open-cell foam. The substance having a hydrophobic property includes reactive silicone.

The cylinder preferably includes an auxiliary hydrophobic agent mixed in said foam such as asphalt liquid paraffin, pertroleum resin or chlorinated paraffin.

The substance having a hydrophobic property may include a non-reactive silicone such as dimethylsiloxane.

Each of the cylinders may have a cylindrical soft synthetic resin open-cell foam and said waterproof means may include a waterproof layer formed over the outer circumferential surface of said foam. The waterproof layer may be made of a substances having water repellency such as polyethylene, polyurethane or Neoprene.

The coil spring body of the vehicle suspension device comprises a cylindrical coil spring or barrel-shaped coil spring. In case of a barrel-shaped coil spring the outer circumferential surface of the wall of each of said cylinders conforms to the outer shape of said barrel-shaped coil spring.

Each of said cylinders of the vehicle suspension device is constructed so as to absorb an unbalanced load acting thereon. According to one embodiment of the invention the inner and outer circumferential surfaces of each of the said cylinders are eccentric and have uniform density. The thick part of the wall of each of said cylinders is arranged closer to a wheel, and a thin part thereof is arranged farther from the wheel.

In accordance with a further embodiment of the invention the inner and outer circumferential surfaces of the wall of each of the said cylinders are coaxial and have unbalanced density. The part of each of said cylinders having a higher density is arranged closer to the wheel and part thereof having a lower density is arranged farther from the wheel.

This invention can be more fully understood from the following detailed description when taken in conjunction with the accompanying drawings, in which:

Fig. 1 is a partially sectional, front view of a first embodiment of a vehicle suspension device according to the present invention;

Fig. 2 is a sectional view of the coil spring assembly of the vehicle suspension device shown in Fig. 1;

Fig. 3 is a graph showing the correlation between the frequency and the transmission force per unit amplitude of the vehicle suspension device shown in Fig. 1;

Fig. 4 is a partially sectional, front view of a second embodiment of the vehicle suspension device according to the present invention;

Fig. 5 is a graph showing the load amplitude-time characteristics when the cylinder is taken out of the device shown in Fig. 4;

Fig. 6 is a graph showing the load amplitude-time characteristics of the device shown in Fig. 4;

Fig. 7 is a sectional view of the coil spring assembly used in a third embodiment of the vehicle suspension device according to the present invention;

Fig. 8 is a sectional view showing the coil spring assembly used in a fourth embodiment of the vehicle suspension device according to the present invention;

Fig. 9 is a sectional view showing the coil spring assembly used in a fifth embodiment of the vehicle suspension device according to the present invention;

Figs. 10 and 11 are a sectional view and a top view, respectively, of the coil spring assembly used in a sixth embodiment of the vehicle suspension device according to the present invention;

Fig. 12 is a sectional view of the coil spring assembly used in a seventh embodiment of the vehicle suspension device according to the present invention;

Fig. 13 is a sectional view showing the coil spring assembly used in an eighth embodiment of the vehicle suspension device according to the present invention; and

Fig. 14 is a sectional view showing the coil spring assembly used in a ninth embodiment of the vehicle suspension device according to the present invention.

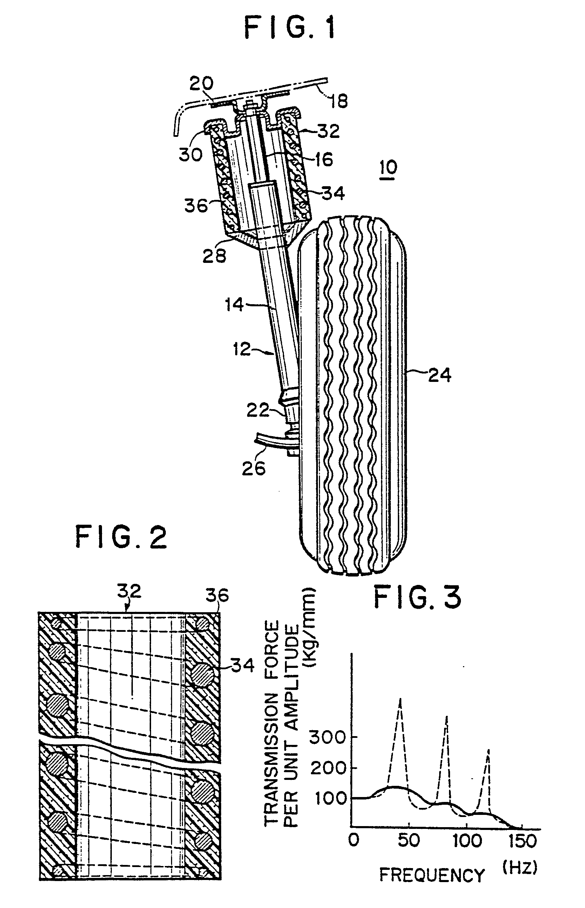

The first embodiment of the vehicle suspension device according to the present invention will now be described in detail with reference to a case of a four-wheeled vehicle referring to Figs. 1 to 3, of the accompanying drawings.

Fig. 1 shows a straddle-type vehicle suspension device 10 for a four-wheeled device i.e. car. This vehicle suspension device 10 comprises a shock absorber 12. The shock absorber 12 includes a main body 14 in which oil is sealed, and a rod 16 which outwardly extends from the interior of the main body 14 and is coaxial therewith. The rod 16 is pressed into the main body 14 when an impact is exerted thereon, and the impact is absorbed through the oil. The upper end of the rod 16 is securely fixed to a body 18 of the four-wheeled vehicle through a rod holder 20. A steering knuckle 22 is integrally formed with the lower end of the main body 14. A wheel 24 is mounted to the steering knuckle 22 and may be replaced as needed. The lower part of the main body 14 of the shock absorber 12 is supported by a lower arm 26 of the four-wheeled vehicle through the steering knuckle 22.

A dish-shaped lower spring holder 28 is mounted to the upper part of the main body 14 of the shock absorber 12 to be coaxial with the main body 14. A dish-shaped upper spring holder 30 is mounted to the upper part of the rod 16 of the shock absorber 12 to be coaxial with the rod 16. A coil spring assembly 32 is interposed between the lower spring holder 28 and the upper spring holder 30 to be slightly compressed and to be coaxial with the shock absorber 12.

The coil spring assembly 32, as shown in Fig. 2, has a coil spring body 34 formed of a compression coil spring and a cylinder 36 which has waterproof means and a wall embedding the overall coil spring body 34 and which is made of foamed soft synthetic resin treated to be surging-proof.

The coil spring body 34 is formed in a cylindrical form having a plurality of turns from a coil wire whose diameter, becomes smaller towards the ends. As this coil wire, a steel wire 12 mm in maximum diameter and 6 mm in minimum diameter may be used. The central diameter of the coil spring body 34 is set to be 110 mm; the coil height is set to be 165 mm; and the spring constant is set to be 1.8 kg/mm.

The cylinder 36 includes a soft synthetic resin foam having a uniform density distribution, for example, a soft polyurethane open-cell foam. The cylinder 36 has the wall with coaxial inner and outer circumferential surfaces, having an outer diameter of 132 mm, an inner diameter of 88 mm, and a height of 165 mm. The coil spring body 34 is embedded in the wall of the cylinder 36 to be coaxial therewith. The cylinder 36 with waterproof means is formed of a soft, waterproof polyurethane foam. The polyurethane foam is prepared by the reaction between hydrophobic polyol and isocyanate. It is preferred to add a hydrophobic agent, for example a reactive silicone to the reactants in the reaction step. The foam is mixed with an auxiliary hydrophobic agent such as asphalt. Also, a vibration damping agent such as iron powder may be added to the foam for enabling the foam to exhibit a vibration damping effect.

According to the vehicle suspension device 10 of the construction as described above, the coil spring body 34 is completely embedded in the wall of the cylinder 36 of soft foamed urethane treated to be waterproof. Therefore, mud splashed during travel or rainwater may not permeate the soft polyurethane foam having the hydrophobic property to reach the coil spring body 34, so that corrosion or rusting of the coil spring body 34, which is usually caused thereby, may be prevented. Especially with the first embodiment described above, a special step of coating a rust-resistant paint on the coil spring body 34 is not necessary, so that this coating step of the rust-resistant paint may be eliminated from the conventional steps. Furthermore, pebbles or stones rebounding during travel may not strike the coil spring body 34. Therefore, it becomes unnecessary to mount a dust cover to the coil spring body 34 as in the conventional case. Damage to the coil spring body 34 by being struck by pebbles or stones, which leads to stress concentration at the damaged portion and breakage of the coil spring body 34, may be prevented.

Since the cylinder 36 has the soft polyurethane foam containing the vibration damping agent, the generation of surging vibrations in the coil spring assembly 32 is substantially prevented even when the vehicle is subjected to high speed vibrations, as may be seen from the solid line in Fig. 3 showing the correlation between the surging vibration frequency and the transmission force per unit amplitude. In Fig. 3, the broken line shows the surging vibration frequency-transmission force per unit amplitude characteristics obtained with a conventional vehicle suspension device.

Between the adjacent turns of the coil spring body 34 is filled part of the cylinder 36, that is, part of the soft polyurethane foam. Due to this structure, the adjacent turns may not bang together even when a strong impact is exerted on the vehicle. The generation of bearing sounds may be prevented as well as damage to the coil spring body 34. Stress concentration at the damaged portion of the coil spring body 34 and breakage of the coil spring body 34 at this part may also be prevented. Since part of the soft polyurethane foam is interposed between each pair of adjacent turns, an excessive load on the vehicle may not result in contact between adjacent turns. Therefore, the rubber-made spring sheet and the bound bumper rubber which have been conventionally required may be eliminated, so that the number of parts used for the vehicle suspension device may be reduced.

Since the polyurethane foam constituting the cylinder 36 is soft and of open-cell type, its resistance, that is, its modulus of elasticity is small so that the spring constant of the coil spring assembly 32 need not be changed very much from the spring constant of the coil spring body 34.

In this embodiment, the description has been made for the cylinder 36 with a soft polyurethane foam. However, the material is not particularly limited to polyurethane, but may be any material which foams the synthetic rubber having open-cells and which is soft; for example, polyvinyl chloride foam, polyethylene foam, ethylene-vinyl acetate copolymer foam, etc. Incidentally, as the hydrophobic agent a non-reactive silicon, for example, dimethyl siloxane, may be added in place of the reactive silicone in the step of producing polyurethane foam.

As the auxiliary hydrophobic agent to be mixed in the soft synthetic resin foam, tar as bitumen, petroleum pitch, petroleum resin, animal oil, plant oil, liquid paraffin, chlorinated paraffin, low-molecular-weight polybutadiene, butylated resin or the like may be used instead of asphalt.

The vibration damping agent to be mixed in the soft synthetic resin foam may be sand powder in place of the iron powder mentioned hereinabove.

The present invention is not limited to the particular construction and specific values described above with reference to the first embodiment, and many modifications and changes may be made within the scope of the present invention. Some of the modifications will be described below. In the description to follow, the same parts as in the first embodiment will be denoted by the same reference numerals, and the detailed description thereof will be omitted.

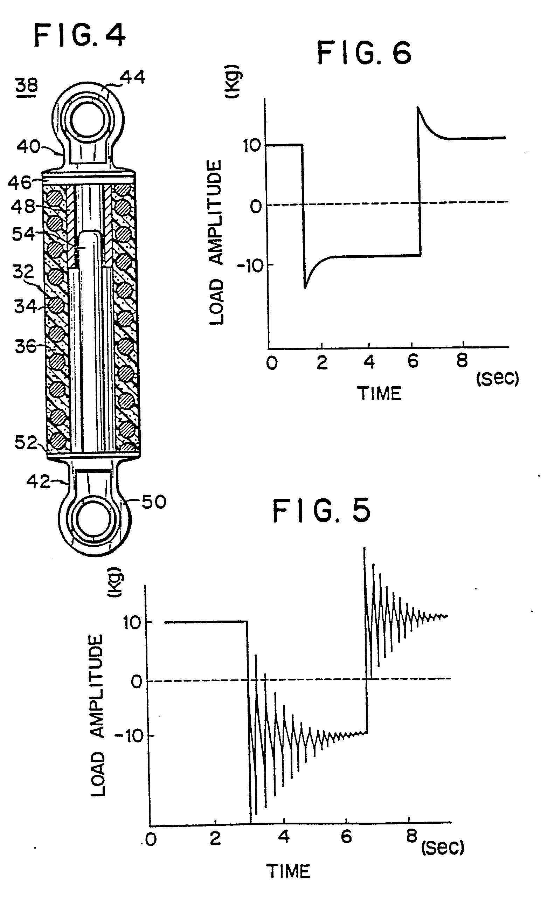

Fig. 4 shows the second embodiment of the vehicle suspension device according to the present invention. In this second embodiment, a vehicle suspension device 38 for a motorized two-wheeled vehicle such as a motorcycle or motor scooter is described. This vehicle suspension device 38 has a first part 40 connected to the body (not shown) of the motorized two-wheeled vehicle, a second part 42 connected to a wheel (not shown), and the coil spring assembly 32 interposed therebetween.

The first part 40 has a first connecting part 44 of doughnut shape which is to be connected to the vehicle body, a first spring seat 46 for receiving the upper end of the coil spring assembly 32, and a cylindrical part 48 projecting from this first spring seat 46 toward the second part; these three parts are coaxially integrally formed with each other. The second part 42 has a second connecting part 50 of doughnut shape which is to be connected to the wheel, a second spring seat 52 for receiving the lower end of the coil spring assembly 32, and a rod 54 projecting from this second spring seat 52 toward the first part 40; these three parts are coaxially integrally formed with each other. The inner circumferential surface of the cylindrical part 48 is formed to loosely receive the outer circumferential surface of the rod 54. The lengths of the rod 54 and the cylindrical part 48 are set so that the front end of the rod 54 may be positioned within the cylindrical part 48 when no load is exerted on the vehicle suspension device 38 and the front end of the rod 54 may not be in contact with the bottom surface of the first spring seat 46 under the maximum load condition.

Although the construction of the coil spring assembly 32 is substantially the same as that in the first embodiment, the dimensions of the constituting parts have been changed for application to a two-wheeled vehicle. The inner circumferential surface of the cylinder 36 of the coil spring assembly 32 and the outer circumferential surface of the cylindrical part 48 of the first part 40 are contiguous for holding each other.

Since the second embodiment has the construction as described above, the coil spring assembly 32 is expanded and contracted according to the fluctuations in the load exerted on the vehicle suspension device 38 through the first part 40 and the second part 42. The expansion and contraction of the coil spring assembly 32 simultaneously expands and contracts the coil spring body 34 and the cylinder 36. This cylinder 36 has the soft polyurethane foam and the load exerted on it is relatively smaller than that exerted on the four-wheeled vehicle. Therefore, this soft polyurethane foam acts to attenuate the load impact. The expansion and contraction of the coil spring body 34, that is, the vibrations and impacts acting on the vehicle suspension device 38, may thus be effectively attenuated without a shock absorber.

When a vehicle suspension ion device does not have the cylinder 36 with the soft polyurethane foam, vibrations are repeatedly generated as may be seen from Fig. 5. In contrast with this, in the second embodiment according to the present invention, the vibrations are effectively absorbed as shown in Fig. 6, and the maximum amplitude is also decreased without particularly incorporating a shock absorber.

The second embodiment of the present invention is advantageous in that, in addition to the effects obtained with the first embodiment described above, the comfort of a two-wheeled vehicle is vastly improved on bad roads without requiring the use of shock absorber.

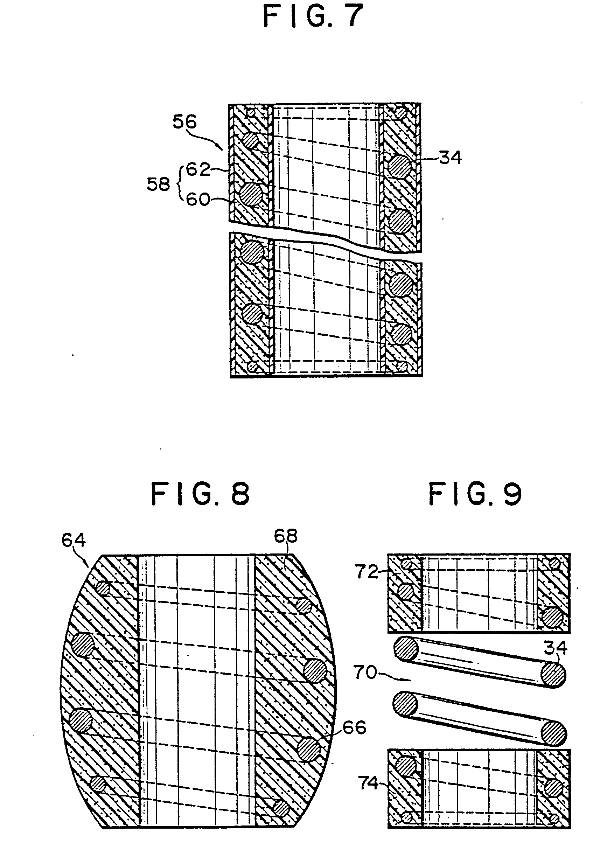

Fig. 7 shows the third embodiment of the vehicle suspension device according to the present invention. In the first and second embodiments described above, the waterproof means for making the soft polyurethane foam waterproof was achieved by using the hydrophobic polyol and mixing a hydrophobic and auxiliary hydrophobic agents in the soft polyurethane foam mixture. However, the waterproof means is not limited to this. For example, as seen from a coil spring assembly 56 shown in Fig. 7, a cylinder 58 of the coil spring assembly 56 may comprise a cylinder body 60 of soft polyurethane foam and a waterproof layer 62 formed over the inner and outer circumferential surfaces of this cylinder body 60. The coil spring body 34 is embedded in the wall of the cylinder body 60. This waterproof layer 62 may be of any material which is capable of preventing water from entering into and preventing impairing softness of the cylinder body 60;

thus it may be of polyethylene, polyurethane, Neoprene, polypropylene, 1,2-polybutadiene, an ethylene-vinyl acetate copolymer, vinylidene chloride and so on. The waterproof layer 62, if made of polyethylene, is fitted to the cylinder body 60 by thermal contraction. If it is made of polyurethane, it is adhered to the body 60 with an adhesive or is fitted to the body 60 by thermal contraction, by coating polyurethane on the body 60 or by coating polyurethane on the inner surface of a mold before foam molding of the body 60. A waterproof layer 62 of Neoprene is formed by applying a Neoprene solution to the surface of the cylinder body 60.

Since the third embodiment has the construction as described above, the water from the outside may not reach the coil spring body 34 embedded in the cylinder 58, so that the coil spring body 34 embedded in the cylinder 58 may be completely protected from water. The waterproof means for making the soft polyurethane foam waterproof is not thus limited to using the hydrophobic polyol and mixing a hydrophobic and auxiliary hydrophobic agents in the soft polyurethane foam, but may be achieved by forming the waterproof layer on the surface of the soft polyurethane foam. Similar effects as obtainable with the first embodiment may be obtained with the third embodiment.

Fig. 8 shows the fourth embodiment of the vehicle suspension device according to the present invention. In the description of the first to third embodiments described above, the coil spring body 34 of the coil spring assembly 32 comprises a cylindrical compression coil spring. However, the shape of this coil spring body 34 is not limited to a cylinder. For example, as shown in Fig. 8, a coil spring body 66 of a coil spring assembly 64 may comprise a barrel-shaped compression coil spring. The central part of the outer circumferential surface of the wall of a cylinder 68 outwardly protrudes in conformity with the outer circumferential surface of the barrel-shaped coil spring so that the coil spring body 66 comprising the barrel-shaped coil spring is completely embedded in the wall of the cylinder 68.

Similar effects as obtained with the other embodiments described above may be obtained with the fourth embodiment having the construction as described above except that the coil spring assembly 64 has spring characteristics particular to the barrel-shaped coil spring.

Fig. 9 shows the fifth embodiment of the vehicle suspension device according to the present invention. In the first to fourth embodiments described above, the coil spring body 34 was described as embedded within the overall wall of the cylinder 36. However, adjacent turns of the coil spring of a conventional vehicle suspension device bang against each other mostly at both ends of the coil spring at which the diameter of the spring wire is narrower. Therefore, as shown in Fig. 9, a coil spring assembly 70 has the coil spring body 34 and a pair of cylinders 72 and 74 which are located at both ends of the coil spring body 34 and in which are embedded turns of narrower diameter than that at the central portion of the spring wire.

The object of the present invention may be accomplished with the construction as described above according to the fifth embodiment. In the fifth embodiment, rust resistant paint must be applied to the central portion of the coil spring body 34 exposed to the exterior.

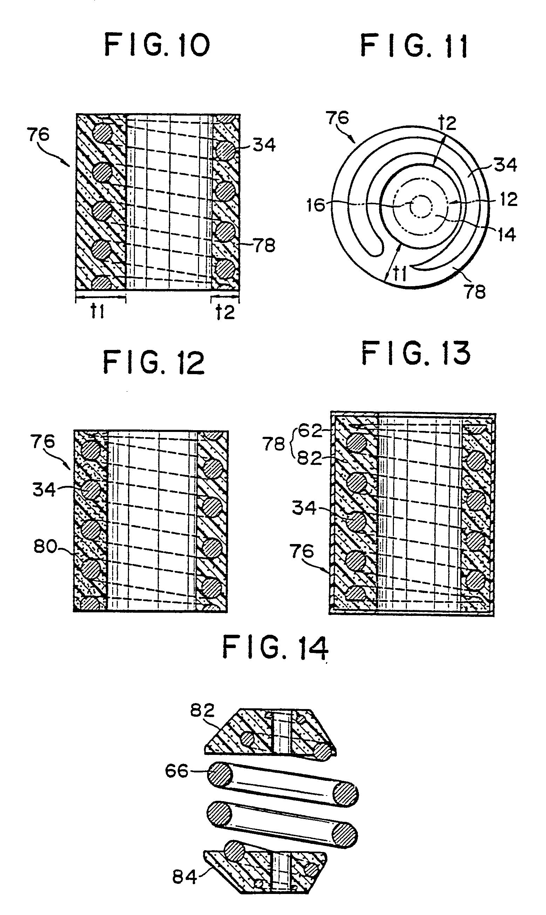

Figs. 10 and 11 show the sixth embodiment of the vehicle suspension device according to the present invention. In the embodiments described above, the cylinder had a wall whose inner and outer circumferential surfaces were coaxial and in which the coil spring body was embedded. However, as shown in Figs. 10 and 11, a coil spring assembly 76 may have the coil spring body 34 and a cylinder 78 having a wall whose inner and outer circumferential surfaces are eccentric. This coil spring body 34 is embedded in the wall of the eccentric cylinder 78. The shock absorber 12 (shown in Fig. 1) is arranged to be coaxial with the inner circumferential surface of the wall. This eccentric cylinder 78 is made of the same material as in the first embodiment. The thickness of this eccentric cylinder 78 in the radial direction gradually changes as shown in Fig. 11 and has a maximum thickness t1 and a minimum thickness t2. The part of the cylinder 78 having the maximum thickness t1 and the part of the cylinder 78 having the minimum thickness t2 are opposed to each other. The part of the cylinder 78 having the maximum thickness t1 is arranged to be nearer to the wheel 24 (shown in Fig. 1).

With the construction as described above according to the sixth embodiment, the elasticity of the part of the cylinder 78 having the maximum thickness t1 becomes larger than that at the part having the minimum thickness t2. Even when a bending moment acts on the shock absorber 12 and an unbalanced load acts on the part of the coil spring assembly 76 closer to the wheel than at the part farther from the wheel, according to the vehicle vibrations of the wheel 24, the elasticity of the cylinder 78 is greater at the part of the cylinder 78 having the maximum thickness t1 than at the part having the minimum thickness t2, so that this unbalanced load is cancelled. Therefore, no interference is caused between the main body 14 of the shock absorber 12 and the rod 16, so that friction drag between these two parts 14 and 16 may not increase. Accordingly, the shock absorber operates in a well-controlled manner, and excellent comfort may be obtained. Other similar effects may be obtained as in the first embodiment.

Fig. 12 shows the seventh embodiment. In the sixth embodiment described above, the outer circumferential surface of the wall of the cylinder was set to be eccentric with respect to the central axis of the shock absorber in order to absorb an unbalanced load acting on the coil spring assembly. However, in the seventh embodiment as shown in Fig. 12, the density of the soft polyurethane foam constituting a cylinder 80 may be set to be higher at the part nearer to the wheel than at the part farther from the wheel. Then, even with a coaxial construction of the wall of the cylinder 80, the modulus of elasticity may be varied. Thus, similar effects as obtained in the sixth embodiment may be achieved.

Fig. 13 shows the eighth embodiment of the present invention. According to this eighth embodiment, the eccentric cylinder 78 of the sixth embodiment comprises a cylinder body 82 of soft polyurethane foam and a waterproof layer 62 formed over the outer circumferential surface of this cylinder body 82. With such a construction, similar effects as obtained with the sixth embodiment may be achieved.

Fig. 14 shows the ninth embodiment of the present invention according to which the coil spring body 66 is of barrel-shape, and only the two ends of the coil spring body 66 are embedded in the walls of cylinders 82 and 84, respectively. The outer circumferential surfaces of the walls of the two cylinders are formed to protrude toward the central parts, conforming to the outer shape of the barrel-shaped coil spring body 66. With the construction of the ninth embodiment as described above, the effects obtainable with the seventh embodiment may be achieved together with the effects obtainable with the fourth and fifth embodiments.

Claims

1. A vehicle suspension device which suspends a vehicle body (18) and wheel (24)

comprising a coil spring body (34; 66) having a predetermined number of turns

and a member (36; 68; 78; 80; 82) which is made of elastic material and in which at least one turn located at an end of said coil spring body (34; 60) is embedded,

characterized in that said member (36; 68; 78; 80; 82) is made of soft synthetic resin foam having an open-cell structure and comprising waterproofing means (62) for preventing water from entering into said cells of said member (36; 68; 78; 80; 82).

2. A vehicle suspension device which suspends a vehicle body (18) and a wheel (24), comprising:

a coil spring body (34; 66) having a predetermined number of coaxial turns; and

a first cylinder (72; 82) having a wall in which is embedded at least one turn located at an end of said coil spring body (34; 66),

characterized in that a second cylinder (74; 84) is provided having a wall in which is embedded at least one turn located at the other end of said coil spring body (34; 66) and that said first (72; 82) and second (74; 84) cylinders each include a soft-synthetic resin foam,

said soft synthetic resin foam having an open-cell structure and waterproofing means for preventing water from entering into said cells of said cylinders (72; 82; 74; 84).

3. A vehicle suspension device which suspends a vehicle body (18) and a wheel (24), comprising:

a coil spring body (34; 66) having a predetermined number of coaxial turns; and

a generally cylindrical member (36; 68; 78; 80; 82) in which said coil spring body (34; 66) is substantially completely embedded, said generally cylindrical member (36; 68; 78; 80; 82) having a wall extending in the axial direction of said coil spring body (34; 66) and in which said coil spring body (34; 66) is completely embedded, said wall having a thickness greater than the thickness of the material of said coil spring body (34; 66) as measured in the radial direction of said generally cylindrical member (36; 68; 78; 80; 82), characterized in that said member (36; 68; 78; 80; 82) is made of a soft resin foam having an open-cell structure and waterproofing means for preventing water from entering into the cells of said member (36; 68; 78; 80; 82).

4. The vehicle suspension device according to claim 1, 2 or 3, characterized in that said soft synthetic resin foam is treated to be surging-proof by uniformly mixing in the foam a vibration damping agent such as iron powder and/or sand powder.

5. The vehicle suspension device according to claim 1, 2 or 3, characterized in that said waterproofing means includes a hydrophobic agent mixed in said foam.

6. The vehicle suspension device according to claim 5, characterized in that said hydrophobic agent is a substance having a hydrophobic property.

7. The vehicle suspension device according to claim 6, characterized in that said soft synthetic resin open-cell foam includes a soft-polyurethane open-cell foam.

8. The vehicle suspension device according to claim 7, characterized in that said substance having a hydrophobic property includes a reactive silicone.

9. The vehicle suspension device according to claim 8, characterized in that said member (36; 68; 78; 80; 82) or said cylinder (72; 82; 74; 84), respectively, has an auxiliary hydrophobic agent mixed in said foam such as asphalt, liquid paraffin, petroleum resin or chlorinated paraffin.

10. The vehicle suspension device according to claim 7, characterized in that said substance having a hydrophobic property includes a non-reactive silicone such as diemthyl siloxane.

11. The vehicle suspension device according to claim 1, 2 or 3, characterized in that said waterproofing means includes a waterproof layer (62) formed over the outer circumferential surface of said foam.

12. The vehicle suspension device according to claim 11, characterized in that said waterproof layer (62) is made of a substance having water repellency such as polyethylene, polyurethane or neoprene.

13. The vehicle suspension device according to any one of the preceding claims, characterized in that said coil spring body (34; 66) comprises a cylindrical coil spring or a barrel-shaped coil spring.

14. The vehicle suspension device according to any one of the preceding claims, characterized in that said member (36; 68; 78; 80; 82) or each of said cylinders (72; 82; 74; 84) is constructed so as to absorb an unbalanced load acting thereon.

15. The vehicle suspension device according to claim 14, characterized in that the inner and outer circumferential surfaces of each of said cylinders (72; 82; 74; 84) are eccentric and have uniform density.

16. The vehicle suspension device according to claim 14, characterized in that the inner and outer circumferential surfaces of the wall of each of said cylinders (72; 82; 74; 84) are coaxial and have unbalanced density.

**Patentansprüche**

1. Fahrzeugaufhängung zur Aufhängung eines Rades (24) an einem Fahrzeugkörper (18), mit einem Schraubenfederkörper (34; 66) mit einer vorbestimmten Windungszahl und einem Element (36; 68; 78; 80; 82), das aus elastischem Material hergestellt ist und in dem zumindest eine an einem Ende des Spiralfederkörpers (34; 60) angeordnete Windung eingebettet ist, dadurch gekennzeichnet, daß das Element (36; 68; 78; 80; 82) aus weichem synthetischen Kunststoffschaum besteht, der eine offenzellige Struktur besitzt und Wasserdichtmachungsmittel (62) zum Verhindern eines Eintretens von Wasser in die Zellen des Elements (36; 68; 78; 80; 82) aufweist.

2. Fahrzeugaufhängung zum Aufhängen eines Rades (24) an einem Fahrzeugkörper (18), mit einem Spiralfederkörper (34; 66) mit einer vorbestimmten Anzahl von koaxialen Windungen; einem ersten Zylinder (72; 82) mit einer Wand, in der zumindest eine an einem Ende des Spiralfederkörpers (34; 66) angeordnete Windung eingebettet ist, dadurch gekennzeichnet, daß ein zweiter Zylinder (74; 84) vorgesehen ist, welcher eine Wandung aufweist, in der zumindest eine an dem anderen Ende des Spiralfederkörpers (34; 66) angeordnete Windung eingebettet ist und daß der erste (72; 82) und zweite (74; 84) Zylinder jeweils einen weichen synthetischen Kunststoffschaum beinhalten, der eine offenzellige Struktur und Wasserdichtmachungsmittel zur Verhinderung eines Eintretens von Wasser in die Zellen der Zylinder (72; 82; 74; 84) aufweist.

3. Fahrzeugaufhängung zur Aufhängung eines Rades (24) an einem Fahrzeugkörper (18), mit einem Spiralfederkörper (34; 66) mit einer vorbestimmten Anzahl von koaxialen Windungen; und einem im wesentlichen zylindrischen Element (36; 68; 78; 80; 82), in dem der Spiralfederkörper (34; 66) im wesentlichen vollständig eingebettet ist, wobei das im wesentlichen zylindrische Element (36; 68; 78; 80; 82) eine sich in Axialrichtung des Spiralfederkörpers (34; 66) erstreckende Wand aufweist, in der der Spiralfederkörper (34; 66) vollständig eingebettet ist, wobei die Wand eine Dicke aufweist, die größer ist als die Dicke des Materials des Spiralfederkörpers (34; 66), gemessen in Radialrichtung des im wesentlichen zylindrischen Elements (36; 68; 78; 80; 82), dadurch gekennzeichnet, daß das Element (36; 68; 78; 80; 82) aus einem weichen Kunststoffschaum mit einer offenzelligen Struktur und einem Wasserdichtmachungsmittel zum Verhindern des Eintretens von Wasser in die Zellen des Elements (36; 68; 78; 80; 82) besteht.

4. Fahrzeugaufhängung nach Anspruch 1, 2 oder 3, dadurch gekennzeichnet, daß der weiche synthetische Kunststoffschaum durch eine Behandlung schwingungsfest gemacht ist, bei der in den Schaum ein schwingungsdämpfendes Mittel wie beispielsweise Eisenpulver und/oder Sandpulver gleichmäßig hinzugemischt ist.

5. Fahrzeugaufhängung nach Anspruch 1, 2 oder 3, dadurch gekennzeichnet, daß das Wasserdichtmachungsmittel ein in den Schaum gemischtes hydrophobes Mittel enthält.

6. Fahrzeugaufhängung nach Anspruch 5, dadurch gekennzeichnet, daß das hydrophobe Mittel eine Substanz mit einer hydrophoben Eigenschaft ist.

7. Fahrzeugaufhängung nach Anspruch 6, dadurch gekennzeichnet, daß der weiche synthetische offenzellige Kunststoffschaum einen weichen offenzelligen Polyurethanschaum umfaßt.

8. Fahrzeugaufhängung nach Anspruch 7, dadurch gekennzeichnet, daß die Substanz mit der hydrophoben Eigenschaft ein reaktives Silikon umfaßt.

9. Fahrzeugaufhängung nach Anspruch 8, dadurch gekennzeichnet, daß das Element (36; 68; 78; 80; 82) bzw. der Zylinder (72; 82; 74; 84) ein in den Schaum gemischtes zusätzliches hydrophobes Mittel wie beispielsweise Asphalt, Flüssigparaffin, Petroleumkunststoff oder chloriertes Paraffin aufweist.

10. Fahrzeugaufhängung nach Anspruch 7, dadurch gekennzeichnet, daß die Substanz mit einer hydrophoben Eigenschaft ein nicht-reaktives Silikon wie beispielsweise Dimethylsiloxan umfaßt.

11. Fahrzeugaufhängung nach Anspruch 1, 2 oder 3, dadurch gekennzeichnet, daß das Wasserdichtmachungsmittel eine über die äußere Umfangsoberfläche des Schaums gebildete wasserdichte Schicht (62) umfaßt.

12. Fahrzeugaufhängung nach Anspruch 11, dadurch gekennzeichnet, daß die wasserdichte Schicht (62) aus einer wasserabweisenden Substanz wie Polyäthylen, Polyurethan oder Neopren besteht.

13. Fahrzeugaufhängung nach einem der vorhergehenden Ansprüche, dadurch gekennzeichnet, daß der Spiralfederkörper (34; 66) eine zylindrische oder tonnenförmige Spiralfeder aufweist.

14. Fahrzeugaufhängung nach einem der vorhergehenden Ansprüche, dadurch gekennzeichnet, daß das Element (36; 68; 78; 80; 82) oder jeder der Zylinder (72; 82; 74; 84) so gestaltet ist, daß es bzw. er eine darauf einwirkende unsymmetrische Last absorbiert.

15. Fahrzeugaufhängung nach Anspruch 14, dadurch gekennzeichnet, daß die inneren und äußeren Umfangsoberflächen jeder der beiden Zylinder (72; 82; 74; 84) exzentrisch sind und eine gleichförmige Dichte aufweisen.

16. Fahrzeugaufhängung nach Anspruch 14, dadurch gekennzeichnet, daß die inneren und äußeren Umfangsoberflächen jeder der Zylinder (72; 82; 74; 84) koaxial sind und eine ungleiche Dichte aufweisen.

**Revendications**

1. Dispositif de suspension de véhicule qui suspend un châssis de véhicule (18) et un roue (24) comportant un ressort spiral (34; 66) d'un nombre prédéterminé de spires

et un élément (36; 68; 78; 80; 82) fait d'un matériau élastique et dans lequel est enrobée au moins une spire située à une extrémité du dit ressort spiral (34; 60)

caractérisé en ce que le dit élément (36; 68; 78; 80; 82) est fait en une mousse de résine synthétique souple présentant une structure à cellules ouvertes et comportant des moyens d'étanchéité à l'eau (62) pour éviter que l'eau ne pénètre dans les dites cellules du dit élément (36; 68; 78; 80; 82).

2. Dispositif de suspension de véhicule qui suspend un châssis de véhicule (18) et une roue (24), comportant:

un ressort spiral (34; 66) d'un nombre prédéterminé de spires coaxiales; et

une premier cylindre (72; 82) présentant une paroi dans laquelle est enrobée au moins une spire située à une extrémité du dit ressort spiral (34; 66),

caractérisé en ce qu'il est prévu un second cylindre (74; 84) présentant une paroi dans laquelle est enrobée au moins une spire située à l'autre extrémité du dit ressort spiral (34; 66) et en ce que le dit premier cylindre (72; 82) et le dit second cylindre (74; 84) incluent chacun une mousse de résine synthétique souple, la dite mousse de résine synthétique souple présentant une structure à cellules ouvertes et des moyens d'étanchéité à l'eau pour éviter que l'eau ne pénètre dans les dites cellules des dits cylindres (72; 82; 74; 84).

3. Dispositif de suspension de véhicule qui suspend un châssis de véhicule (18) et une roue (24) comportant:

un ressort spiral (34; 66) d'un nombre prédéterminé de spires coaxiales;

et un élément de forme générale cylindrique (36; 68; 78; 80; 82) dans lequel le dit ressort spiral (3: 66) est enrobé substantiellement complètement, le dit élément, de forme générale cylindrique, (36; 68; 78; 80; 82) présentant une paroi qui s'étend dans la direction axiale du dit ressort spiral (34; 66) et dans laquelle le dit ressort spiral (34; 66) est complètement enrobé, la dite paroi présentant une épaisseur supérieure à celle du matériau du dit ressort spiral (34; 66), mesurée dans la direction radiale du dit élément de forme générale cylindrique (36; 68; 78; 80; 82),

caractérisé en ce que le dit élément (36; 68; 78; 80; 82) est fait d'une mousse de résine souple présentant une structure à cellules ouvertes et des moyens d'étanchéité à l'eau pour éviter que l'eau ne pénètre dans les cellules du dit élément (36; 68; 78; 80; 82).

4. Dispositif de suspension de véhicule selon les revendications 1, 2 ou 3, caractérisé en ce que la dite mousse de résine synthétique souple est traitée pour être anti-battements en mélangeant uniformément dans la mousse un agent amortisseur de vibrations comme une poudre de fer et/ou une poudre de sable.

5. Dispositif de suspension de véhicule selon les revendications 1, 2 ou 3, caractérisé en ce que les dits moyens d'étanchéité à l'eau incluent un agent hydrophobe mélangé dans la dite mousse.

6. Dispositif de suspension de véhicule selon la revendication 5, caractérisé en ce que le dit agent hydrophobe est une substance ayant une caractéristique hydrophobe.

7. Dispositif de suspension de véhicule selon la revendication 6, caractérisé en ce que la dite mousse de résine synthétique souple à cellules ouvertes inclut une mousse de polyuréthane souple à cellules ouvertes.

8. Dispositif de suspension de véhicule selon la revendication 7, caractérisé en ce que la dite substance ayant une caractéristique hydrophobe inclut une silicone réactive.

9. Dispositif de suspension de véhicule selon la revendication 8, caractérisé en ce que le dit élément (36; 68; 78; 80; 82) ou le dit cylindre (72; 82; 74; 84) respectivement, présente un agent hydrophobe auxiliaire mélangé dans la dite mousse, comme de l'asphalte, de la paraffine liquide, de la résine de pétrole ou de la paraffine chlorée.

10. Dispositif de suspension de véhicule selon la revendication 7, caractérisé en ce que la dite substance ayant une caractéristique hydrophobe inclut une silicone non-réactive comme du diméthylsiloxane.

11. Dispositif de suspension de véhicule selon les revendications 1, 2 ou 3, caractérisé en ce que les dits moyens d'étanchéité à l'eau incluent une couche étanche à l'eau (62) moulée sur la surface circonférentielle externe de la dite mousse.

12. Dispositif de suspension de véhicule selon la revendication 11, caractérisé en ce que la dite couche étanche à l'eau (62) est faite d'une substance qui repousse l'eau comme du polyéthylène, du polyuréthane ou du néoprène.

13. Dispositif de suspension de véhicule selon l'une quelconque des revendications précédentes, caractérisé en ce que le dit ressort spiral (34; 66) comporte un ressort spiral cylindrique ou un ressort spiral en forme de tonneau.

14. Dispositif de suspension de véhicule selon l'une quelconque des revendications précédentes, caractérisé en ce que le dit élément (36; 68; 78; 80; 82) ou chacun des dits cylindres (72; 82; 74; 84) est construit de façon à absorber une charge déséquilibrée agissant sur lui.

15. Dispositif de suspension de véhicule selon la revendication 14, caractérisé en ce que la surface circonférentielle interne et la surface circonférentielle externe de chacun des dits cylindres (72, 82; 74; 84) sont excentrées et ont une densité uniforme.

16. Dispositif de suspension de véhicule selon la revendication 14, caractérisé en ce que la surface circonférentielle interne et la surface circonferéntielle externe de la paroi de chacun des dits cylindres (72, 82; 74; 84) sont coaxiales et ont un densité déséquilibrée.

# FIG. 1

# FIG. 2

# FIG. 3

TRANSMISSION FORCE PER UNIT AMPLITUDE (Kg/mm)

FREQUENCY (Hz)

# FIG. 4

**38**

44
40
46
48
54
32
34
36
52
42
50

# FIG. 6

(Kg)

LOAD AMPLITUDE

10

0

-10

0    2    4    6    8    (Sec)

TIME

# FIG. 5

(Kg)

LOAD AMPLITUDE

10

0

-10

0    2    4    6    8 (Sec)

TIME

# FIG. 7

# FIG. 8

# FIG. 9

# FIG. 10

# FIG. 11

# FIG. 12

# FIG. 13

# FIG. 14